# FASCICULE DE BREVET EUROPEEN

(11) **EP 0 788 207 B1**
(45) Date de publication et mention de la délivrance du brevet: **19.07.2000**
(21) Numéro de dépôt: 97400182.8
(22) Date de dépôt: 27.01.1997
(51) Int. Cl.: H02B 13/065

(54) **Dispositif de détection d'arc interne pour câble électrique à isolation gazeuse**
Vorrichtung zum Detektieren eines internen Lichtbogens für ein gasisoliertes elektrisches Kabel
Device for detecting internal arcing in a gasinsulated cable

(30) Priorité: 31.01.1996 FR 9601131
(43) Date de publication de la demande: 06.08.1997
(73) Titulaire: GEC ALSTHOM T & D SA, 75116 Paris (FR)
(72) Inventeur: Pham, Van Doan, 69330 Meyzieu (FR)
(74) Mandataire: Gosse, Michel

(56) Documents cités:
- EP-A- 0 482 547
- EP-A- 0 673 098
- WO-A-95/25271
- DE-A- 3 534 176
- DE-A- 4 116 281
- FR-A- 2 640 386
- FR-A- 2 674 337
- FR-A- 2 719 125

## Description

La présente invention est relative à un dispositif pour détecter et localiser un arc interne dans un câble électrique à isolation gazeuse.

Un tel câble électrique a été décrit notamment dans la demande de brevet français FR-A- 2714203 déposée le 21 décembre 1993 au nom de GEC ALSTHOM T&D SA.

Il comprend une enveloppe extérieure cylindrique étanche en acier dans laquelle trois conducteurs de phase sont disposés parallèlement à l'axe de l'enveloppe. Une enveloppe en aluminium est intercalée entre les conducteurs et l'enveloppe en acier, très près de cette dernière, et constitue un écran magnétique permettant de réduire l'échauffement de l'enveloppe en acier. Il est indiqué que le câble est constitué de plusieurs tronçons, un tronçon étant constitué par le soudage bout à bout sur le site d'éléments de câbles montés en usine. Chaque élément de câble comprend un élément d'enveloppe en acier, un élément d'enveloppe en aluminium et trois conducteurs maintenus par des bras isolants; un tel élément de câble a une longueur de dix mètres environ, un tronçon, constitué d'une dizaine d'éléments, ayant une longueur de cent mètres environ. Le câble est rempli de gaz isolant, tel que l'azote sous pression. Le document indique également que deux tronçons adjacents sont séparés par une cloison assurant notamment l'étanchéité entre les deux tronçons.

Un dispositif de détection d'arc interne pour un tel câble électrique à isolation gazeuse a été décrit dans la demande de brevet FR-A- 2719125.

Ce dispositif comprend une fibre optique disposée selon une boucle dont les deux brins s'étendent chacun le long du câble en traversant de manière étanche les cloisons étanches, la boucle étant ouverte à l'une des extrémités du câble, un premier brin étant agencé pour recueillir et transmettre de la lumière générée par le défaut, l'autre brin étant gainé de manière à être opaque à la lumière, le dispositif comprenant des moyens pour recueillir la lumière à chacune des extrémités de la boucle et mesurer la durée séparant l'apparition de la lumière à l'extrémité de chacun desdits brins. Dans chaque tronçon, un concentrateur de lumière permet d'augmenter l'intensité de la lumière envoyée sur la fibre.

Ce dispositif, qui permet de détecter l'apparition d'un arc interne intense, n'est pas assez sensible pour détecter un arc interne de faible intensité.

En effet, la mise en série des concentrateurs de lumière le long de la fibre entraîne une perte de lumière à chaque jonction. Si l'arc interne est faible, la lumière recueillie est trop faible pour être détectée aux extrémités de la fibre.

Un autre dispositif de contrôle envisageant l'utilisation de plusieurs fibres optiques est connu du document EP-A- 0673098.

Un but de la présente invention est de concevoir un dispositif de détection permettant de détecter et localiser un arc interne même de faible intensité.

L'invention a pour objet un dispositif de détection d'arc interne pour un câble à isolation gazeuse comprenant une pluralité de tronçons séparés par des cloisons étanches, chaque tronçon comprenant une enveloppe d'acier cylindrique, un écran d'aluminium cylindrique, coaxial et intérieur à ladite enveloppe, et trois conducteurs, caractérisé en ce qu'il comprend, disposées entre l'enveloppe et l'écran, des fibres optiques en nombre égal à celui des tronçons du câble et s'étendant d'une extrémité à l'autre du câble, chacun desdits tronçons étant surveillé par une seule fibre, la fibre affectée à la surveillance d'un tronçon comportant, dans ce tronçon, un capteur de lumière inséré en série dans la fibre, le dispositif comprenant, à chaque extrémité, des moyens d'enregistrement de la lumière émise par les fibres optiques en cas d'arc interne dans un tronçon.

De préférence, le capteur de lumière comprend des morceaux de fibre plastique fluorescente insérés en série dans la fibre affectée à la surveillance du tronçon.

Avantageusement, le nombre de morceaux de fibres fluorescentes est de trois, ces morceaux étant disposés respectivement aux deux extrémités du tronçon et au milieu du tronçon .

Les morceaux de fibre plastique fluorescente ont une longueur comprise entre 0,15 et 1 mètre.

De préférence, les moyens sensibles à la lumière sont constitués par des plaques munies de papier photographique approprié et ultra sensible.

Dans un premier mode de réalisation, les plaques sont plates et fixes.

En variante, les plaques sont cylindriques et tournantes.

Dans un mode particulier de réalisation, le dispositif de détection d'arc interne comprend plusieurs groupes de câbles optiques, comprenant chacun plusieurs câbles optiques en série, chaque groupe de câbles optiques n'étant affecté qu'à la surveillance d'une partie des tronçons du câble électrique à isolation gazeuse.

Un exemple de mise en oeuvre de l'invention est décrit ci-après, en référence aux dessins annexés dans lesquels:
- la figure 1 est une vue schématique d'un câble électrique à isolation gazeuse par laquelle est expliqué le principe de l'invention,
- la figure 2 est une vue partielle en élévation d'un câble électrique à isolation gazeuse à quatre tronçons, montrant le capteur de lumière dont est muni chaque tronçon,
- la figure 3 est une vue en coupe transversale d'un câble optique à quatre fibres,
- la figure 4 est une vue schématique d'un câble électrique à isolation gazeuse à dix tronçons, comprenant deux groupes de câbles optiques.

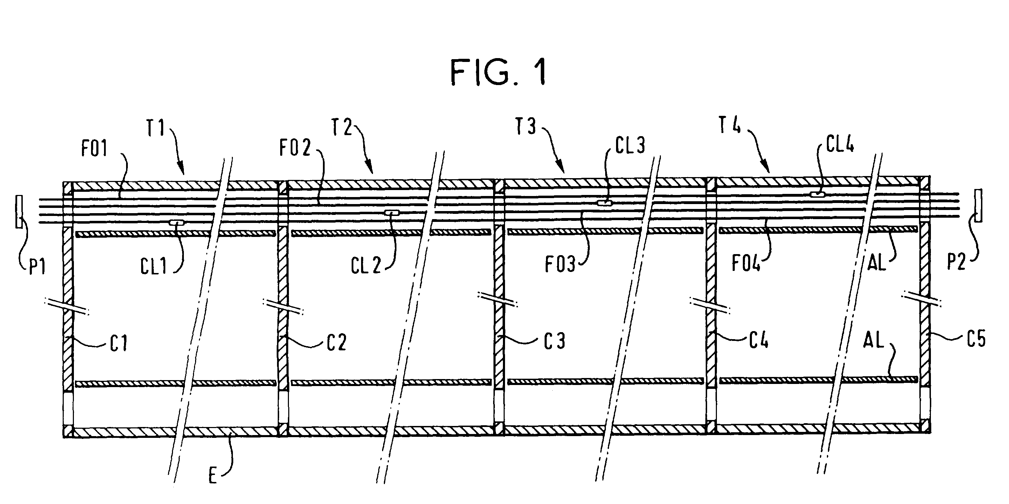

La figure 1 représente schématiquement un câble électrique à isolation gazeuse à quatre tronçons T1 à T4. On n'a représenté, pour la clarté du dessin, que l'enveloppe extérieure E des tronçons, l'écran d'aluminium AL, et les cloisons C1 à C5 délimitant les différents tronçons.

La détection est faite au moyen de fibres optiques FO1 à FO4, en nombre égal au nombre des tronçons et qui s'étendent d'une extrémité à l'autre du câble électrique.

Chaque fibre optique est affectée à la surveillance d'un tronçon déterminé.

La fibre affectée à la surveillance d'un tronçon donné est associée à un capteur de lumière qui sera défini plus loin. Les capteurs respectifs des tronçons T1 à T4 sont référencés CL1 à CL4.

A au moins une extrémité des fibres F01 à F04 est placé un élément d'enregistrement de lumière, tel qu'une plaque ou un papier photographique approprié P1, sensible à la lumière transmise par la fibre. De préférence des éléments d'enregistrement de lumière P1 et P2 seront placés à chacune des extrémités des fibres optiques, très près de celles-ci, comme le montre la Fig.1.

En cas d'apparition d'arc interne dans un tronçon donné, le capteur de lumière affecté au tronçon considéré capte la lumière de l'arc et la transmet par la fibre jusqu'à ses extrémités où elle impressionne la plaque ou le papier photographique. En repérant les traces d'impression sur les plaques ou les papiers photographiques, on en déduit quel tronçon est en défaut.

Les éléments photographiques peuvent être plats et fixes ou cylindriques et placés sur un tambour tournant. Dans ce dernier cas, connaissant la vitesse de rotation du tambour, on peut en déduire la durée de l'arc interne.

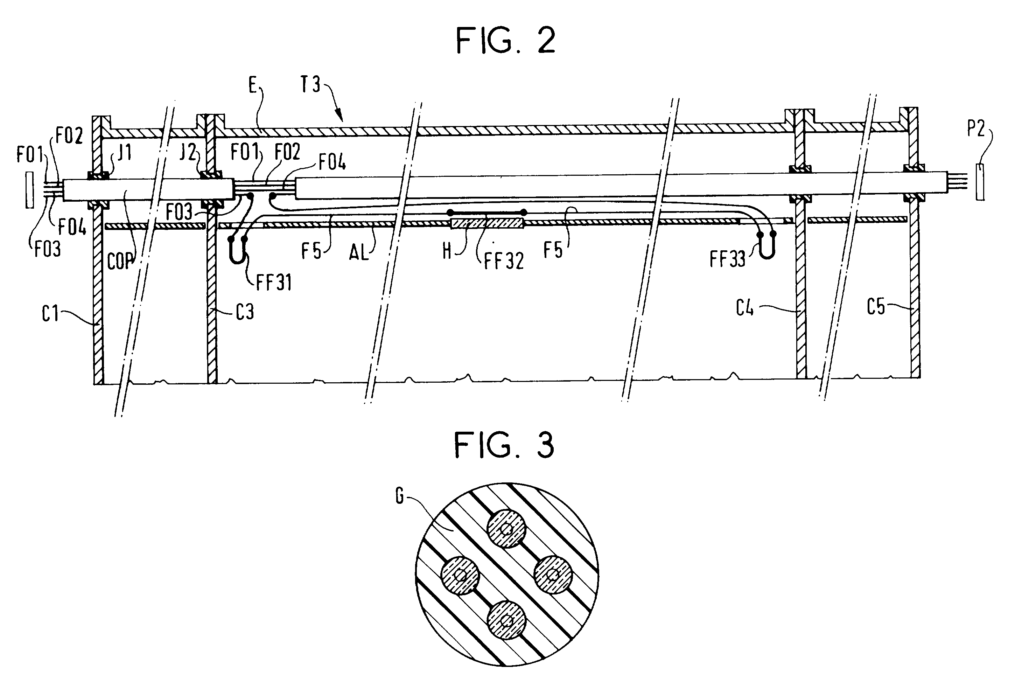

La Fig.2 montre comment est réalisé pratiquement le dispositif de détection dans l'exemple d'un câble électrique à isolation gazeuse à quatre tronçons ayant chacun une longueur de 100 mètres environ.

On distingue dans la Fig.2, le tronçon T3, adjacent aux tronçons T2 et T4 et séparé de ces derniers respectivement par les cloisons étanches C3 et C4, ainsi que les cloisons terminales C1 et C5.

Les fibres sont disposées dans l'espace compris entre l'enveloppe extérieure E en acier du câble électrique et l'écran AL en aluminium.

Les fibres sont disposées dans une gaine commune G, en matériau isolant de bonne tenue à l'arc, tel que le P.T.F.E., comme il est représenté en section dans la figure 3. Le câble optique COp ainsi formé s'étend d'un bout à l'autre du câble électrique, en traversant les cloisons par C1, ..., C3, C4, C5 de manière étanche, par exemple grâce à des joints J1,..., J3, J4, J5. Les joints sont de préférence en matériau thermorétractable. En effet, pour faciliter le tirage du câble optique à travers les cloisons, il y a intérêt à avoir des joints présentant un jeu suffisant. On assure les étanchéités après mise en place du câble optique par chauffage des joints thermorétractables.

Le capteur optique, pour chacun des tronçons, est réalisé comme suit. On prendra comme exemple le tronçon T3.

Le câble optique est dénudé au voisinage d'une des extrémités du tronçon, par exemple au voisinage de la cloison C3 sur une courte portion (10 à 50 centimètres par exemple), et la fibre optique FO3 affectée à la surveillance du tronçon T3 est coupée à cet endroit. Une extrémité de cette fibre est reliée, par un connecteur spécial, au capteur de lumière qui comprend préférentiellement trois morceaux de fibres fluorescentes FF31, FF32 et FF33, disposées respectivement près de la cloison C3, au milieu du tronçon de câble électrique, et près de la cloison C4. Pour la clarté du dessin, les morceaux de fibre optique fluorescente ont été représentées avec un trait plus épais. Ces morceaux de fibres fluorescentes, de longueur comprise entre 0,15 et 1 mètre, sont reliés entre eux et aux extrémités de la fibre F03 par des éléments de fibres optique en silice. Les liaisons se font par des soudures ou par des connecteurs spéciaux qui sont représentés par des points dans la figure.

On rappelle qu'une fibre fluorescente a la propriété de recevoir la lumière par sa surface extérieure et de transmettre axialement une lumière induite par fluorescence, ayant une fréquence déterminée. C'est cette lumière induite qui est détectée par les éléments photographiques P1 et P2.

Dans le cas d'un arc électrique entre deux électrodes en aluminium, la raie ou le spectre dominant a une longueur d'onde dans une gamme de 600 à 650 nm. Ceci correspond à la lumière rouge. Dans l'application à la détection d'un arc interne dans un câble électrique du type décrit dans la présente demande de brevet, on choisira de préférence une fibre fluorescente rouge qui apportera la plus grande sensibilité.

Les morceaux de fibres FF31 et FF33 disposés près des cloisons C3 et C4 respectivement, traversent l'écran d'aluminium AL par des ouvertures appropriées pratiquées dans cet écran. Ils présentent la forme d'un U et peuvent être fixés sur la la partie métallique de la cloison. Ils peuvent être protégés et rigidifiés en les noyant dans un plaque en matériau transparent, tel que le plexiglass.

Le morceau de fibre FF32 , placé au centre du tronçon de câble électrique, est placé sur un hublot transparent H, par exemple en plexiglass, disposé sur l'écran AL. En variante, le morceau FF32 est disposé le long d'une fente pratiquée dans la paroi de l'écran. Dans ce cas, le morceau de fibre est avantageusement noyé au sein d'une plaque transparente, par exemple en plexiglass.

Le capteur optique, tel qu'il vient d'être décrit, permet de recueillir la lumière provenant de tout arc interne, même de faible intensité.

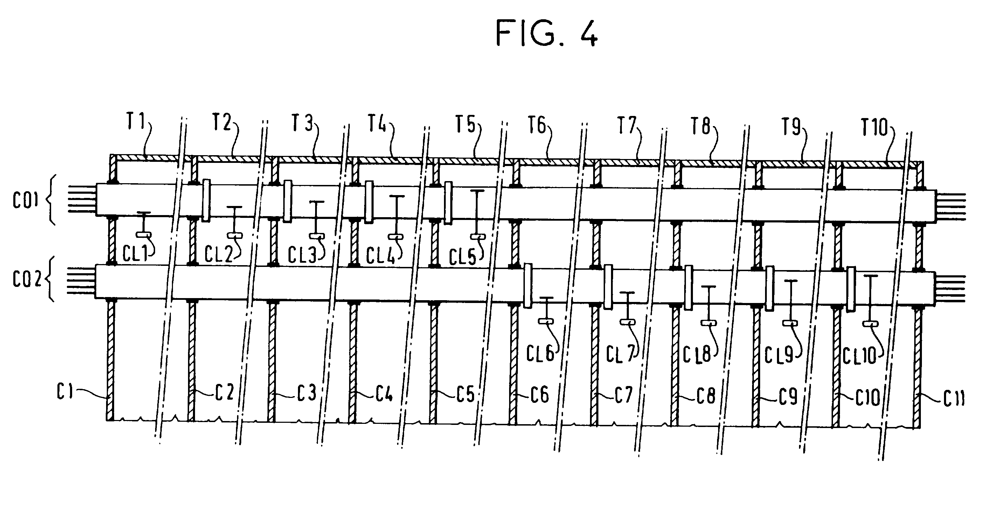

La Fig. 4 illustre une variante de réalisation pour un câble électrique de grande longueur, comprenant par exemple au moins dix tronçons de cent mètres.

Deux problèmes se posent lorsque les câbles optiques sont longs.

D'une part, le nombre élevé de soudure introduit des affaiblissements du signal qui peut être prohibitifs.

D'autre part, le tirage d'un long câble à travers toutes les cloisons étanches peut être difficile si le nombre de tronçon est trop élevé.

Pour résoudre ces problèmes, on utilise des câbles optiques de longueur limitée (500 mètres par exemple), que l'on soude bout à bout, et on limite le nombre de fibres optiques par câble, ce qui permet de limiter le nombre des soudures résultant de l'insertion des capteurs de lumière.

Dans l'exemple de la Fig.4, dans lequel le câble électrique a dix tronçons, on utilise deux groupes de câbles optiques CO1 et CO2 à cinq fibres optiques chacune. Le groupe de câbles optiques CO1 est en charge de la surveillance de cinq tronçons, les tronçons T1 à T5 par exemple, le groupe de câbles optiques C02 étant en charge de la surveillance des tronçons T6 à T10.

Le groupe de câbles optiques CO1 comprend 5 câbles optiques, à 5 fibres optiques, dont la longeur est égale à elle d'un tronçon de câble électrique (100 mètres par exemple), chacun muni d'un capteur optique (CL1 à CL5). Ces câbles de 100 mètres sont reliés en série; le dernier câble est relié à un câble optique à cinq fibres d'une longueur de 500 mètres.

Le groupe de câbles optiques CO2 est constitué de manière semblable d'un câble de 500 mètres en série avec 5 câbles de 100 mètres affectés à la surveillance des tronçons T6 à T10.

## Revendications

1. Dispositif de détection d'arc interne pour un câble à isolation gazeuse comprenant une pluralité de tronçons (T1, T2,...) séparés par des cloisons étanche (C1, C2, ...), chaque tronçon comprenant une enveloppe d'acier cylindrique (E), un écran d'aluminium cylindrique (AL), coaxial et intérieur à ladite enveloppe, et trois conducteurs, caractérisé en ce qu'il comprend, disposées entre l'enveloppe (E) et l'écran (AL), des fibres optiques (FO1, FO2,..) en nombre égal à celui des tronçons du câble et s'étendant d'une extrémité à l'autre du câble, chacun desdits tronçons étant surveillé par une seule fibre, la fibre affectée à la surveillance d'un tronçon comportant, dans ce tronçon, un capteur de lumière (CL1, CL2, ...) inséré en série dans la fibre, le dispositif comprenant, à chaque extrémité, des moyens (P1, P2) d'enregistrement de la lumière émise par les fibres optiques en cas d'arc interne dans un tronçon.

2. Dispositif selon la revendication 1, caractérisé en ce que le capteur de lumière comprend des morceaux de fibre plastique fluorescente (FF31, FF32, FF33) insérés en série dans la fibre affectée à la surveillance du tronçon.

3. Dispositif selon la revendication 2, caractérisé en ce que le nombre de morceaux de fibres fluorescentes est de trois (FF31, FF32, FF33) et que ces morceaux sont disposés respectivement aux deux extrémités du tronçon et au milieu du tronçon.

4. Dispositif selon l'une des revendications 2 et 3, caractérisé en ce que les morceaux de fibre plastique fluorescente (FF31, FF32, FF33) ont une longueur comprise entre 0,15 et 1 mètre.

5. Dispositif selon l'une des revendications 1 à 3, caractérisé en ce que lesdits moyens d'enregistrement de la lumière sont constitués par des plaques (P1, P2) munies de papier photographique approprié et ultra sensible.

6. Dispositif selon la revendication 5, caractérisé en ce que les plaques (P1, P2) sont plates et fixes.

7. Dispositif selon la revendication 5, caractérisé en ce que les plaques (P1, P2) sont cylindriques et tournantes.

8. Dispositif selon l'une des revendications 1 à 7, caractérisé en ce qu'il comprend plusieurs groupes de câbles optiques (CO1, CO2), comprenant chacun plusieurs câbles optiques en série, chaque groupe de câbles optiques n'étant affecté qu'à la surveillance d'une partie des tronçons du câble électrique à isolation gazeuse.

## Patentansprüche

1. Vorrichtung zum Erfassen eines internen Lichtbogens für ein gasisoliertes elektrisches Kabel, das eine Mehrzahl von durch dichte Trennwände (C1, C2, ...) getrennten Abschnitten (T1, T2, ...) umfaßt, wobei jeder Abschnitt eine zylindrische Hülle (E) aus Stahl, eine zylindrische Abschirmung (AL) aus Aluminium koaxial zu und innerhalb der Hülle und drei Leiter umfaßt, dadurch gekennzeichnet, daß sie angeordnet zwischen der Hülle (E) und der Abschirmung (AL) optische Fasern (FO1, FO2, ...) in einer Anzahl gleich der Anzahl der Abschnitte des Kabels umfaßt, die sich von einem Ende des Kabels zum anderen erstrecken, wobei jeder der Abschnitte von einer einzigen Faser überwacht ist, die der Überwachung eines Abschnitts zugeordnete Faser in diesem Abschnitt einen in die Faser in Reihe eingefügten Lichtaufnehmer (CL1, CL2, ...) umfaßt, und daß die Vorrichtung an jedem Ende Mittel (P1, P2) zum Aufzeichnen des von den optischen Fasern im Fall eines internen Lichtbogens in einem Abschnitt emittierten Lichts umfaßt.

2. Vorrichtung nach Anspruch 1, dadurch gekennzeichnet, daß der Lichtaufnehmer Stücke (FF31, FF32, FF33) von fluoreszierender Plastikfaser umfaßt, die in die der Überwachung des Abschnitts zugeordnete Faser in Reihe eingefügt sind.

3. Vorrichtung nach Anspruch 2, dadurch gekennzeichnet, daß die Zahl der fluoreszierenden Faserstücke (FF31, FF32, FF33) drei ist und daß diese Stücke jeweils an den zwei Enden und in der Mitte des Abschnitts angeordnet sind.

4. Vorrichtung nach Anspruch 2 oder 3, dadurch gekennzeichnet, daß die Stücke (FF31, FF32, FF33) von fluoreszierender Plastikfaser eine Länge von zwischen 0,15 und 1 Meter haben.

5. Vorrichtung nach einem der Ansprüche 1 bis 3, dadurch gekennzeichnet, daß die Mittel zum Aufzeichnen des Lichts durch mit geeignetem superempfindlichem Photopapier bestückte Platten (P1, P2) gebildet sind.

6. Vorrichtung nach Anspruch 5, dadurch gekennzeichnet, daß die Platten (P1, P2) flach und ortsfest sind.

7. Vorrichtung nach Anspruch 5, dadurch gekennzeichnet, daß die Platten (P1, P2) zylindrisch und rotierend sind.

8. Vorrichtung nach einem der Ansprüche 1 bis 7, dadurch gekennzeichnet, daß sie mehrere Gruppen von optischen Kabeln (CO1, CO2) umfaßt, die jeweils mehrere optische Kabel in Reihe umfassen, wobei jede Gruppe von optischen Kabeln jeweils nur der Überwachung eines Teils der Abschnitte des gasisolierten elektrischen Kabels zugeordnet ist.

## Claims

1. An internal arc detector device for a gas-insulated cable comprising a plurality of segments (T1, T2, ...) separated by leakproof partitions (T1, T2, ...), each segment comprising a cylindrical steel element (E), a cylindrical aluminum screen (AL) disposed coaxially inside said element, and three conductors; the device being characterized in that it comprises, disposed between the element (E) and the screen (AL) the same number of optical fibers (FO1, FO2, ...) as there are cable segments extending from one end of the cable to the other, each of said segments being monitored by a single fiber, the fiber allocated to monitoring a segment comprising, in said segment, a light sensor (CL1, CL2, ...) inserted in series in the fiber, the device comprising, at each end, means (P1, P2) for recording the light emitted by the optical fibers in the event of an internal arc in a segment.

2. A device according to claim 1, characterized in that the light sensor comprises pieces of fluorescent plastic fiber (FF31, FF32, FF33) inserted in series in the fiber allocated to monitoring the segment.

3. A device according to claim 2, characterized in that the number of pieces of fluorescent fiber is three (FF31, FF32, FF33), and that these pieces are disposed respectively at the two ends of the segment and in the middle of the segment.

4. A device according to claim 2 or 3, characterized in that the pieces of fluorescent plastic fiber (FF31, FF32, FF33) are of a length lying in the range 0.15 m to 1 m.

5. A device according to any one of claims 1 to 3, characterized in that said means for recording light are constituted by plates (P1, P2) provided with suitable ultrasensitive photographic paper.

6. A device according to claim 5, characterized it that the plates (P1, P2) are flat and fixed.

7. A device according to claim 5, characterized in that the plates (P1, P2) are cylindrical and rotary.

8. A device according to any one of claims 1 to 7, characterized in that it comprises a plurality of optical cable groups (CO1, CO2) each comprising a plurality of optical cables in series, each optical cable group being allocated to monitoring only a fraction of the segments of the gas-insulated electric cable.
